# EUROPEAN PATENT APPLICATION

(11) **EP 3 486 619 A1**
(43) Date of publication of application: **22.05.2019**
(21) Application number: 17202318.6
(22) Date of filing: 17.11.2017
(51) Int. Cl.: G01F 23/296, G01B 17/02

(54) **DEVICE AND METHOD FOR DETECTING DEPOSITION LAYERS IN A CONDUIT CONDUCTING A LIQUID OR A SOFT MEDIUM AND/OR FOR LEVEL DETECTION**

(71) Applicant: Hochschule für angewandte Wissenschaften Fachhochschule Coburg, 96450 Coburg (DE)
(72) Inventor: EBERT, Sandra, 98673 Eisfeld OT Harras (DE); Prof. Dr. LINDNER, Gerhard, 96450 Coburg (DE); Prof. Dr. DRESE, Klaus Stefan, 96489 Niederfüllbach (DE); TIETZE, Sabrina, 96361 Steinbach / Wald (DE); VOGT, Thomas, 96274 Itzgrund, OT Kaltenbrunn (DE); LASOTA, Sandra, 96450 Coburg (DE); SCHWUCHOW, Katrin, 96450 Coburg (DE); KREMPEL, Sandro, 96515 Judenbach (DE); LANDSKRON, Johannes, 91301 Forchheim (DE); ROßTEUTSCHER, Immanuel, 96450 Coburg (DE); BECKER, David, 96047 Bamberg (DE)
(74) Representative: Maikowski & Ninnemann Patentanwälte Partnerschaft mbB

(57) **Abstract**

Device and method for detecting deposition layers in a conduit conducting a liquid or a soft medium and/or for level detection, the device comprising a transmitter (31) for generating acoustic waves (SSAW, AWM); a receiver (32) for receiving acoustic waves (SSAW, AWM) evoked by the transmitter (31); a holder (20) carrying the transmitter (31) and the receiver (32), wherein the holder (20) is configured to be detachably connected to the conduit (4) in such a way that the transmitter (31) and the receiver (32) are arranged on an outer side of a sidewall (41) of the conduit (4), wherein a single transmitter-receiver unit provides both the transmitter (31) and the receiver (32) or the transmitter (31) and the receiver (32) are separate units arranged in a distance from one another at the holder (20) in such a way that the transmitter (31) and the receiver (32) are located in a common plane extending at least essentially perpendicular to a longitudinal axis of the conduit (4) when the holder (20) is connected to the conduit (4).

## Description

The invention relates to a device for detecting deposition layers in a conduit conducting a liquid or a soft medium and/or for level detection according to claim 1 and a method for detecting deposition layers in a conduit conducting a liquid or a soft medium and/or for level detection according to claim 13.

Devices and methods for non-destructive testing of conduits are known from the prior art, wherein for example US 6,192,751 B1 discloses a method for fluid level sensing in a sludge laden container using elastic waves propagating a side wall of the container. However, the results obtained by that sensing method may strongly depend on external parameters such as a temperature change, a change of the thickness of the sludge layer and/or a flow of the liquid and thus may be inaccurate.

It is therefore an object of the invention to provide a device and a method permitting more accurate measurements.

According to the invention, a device for detecting deposition layers in a conduit conducting a liquid or a soft medium and/or for level detection is provided, the device comprising
- a transmitter for generating acoustic waves;
- a receiver for receiving acoustic waves evoked by the transmitter;
- a holder carrying the transmitter and the receiver, wherein the holder is configured to be detachably connected to the conduit in such a way that the transmitter and the receiver are arranged on an outer side of a sidewall of the conduit, wherein
- a single transmitter-receiver unit provides both the transmitter and the receiver or the transmitter and the receiver are separate units arranged in a distance from one another at the holder in such a way that the transmitter and the receiver are located in a common plane extending at least essentially perpendicular to a longitudinal axis of the conduit when the holder is connected to the conduit.

The contour of the conduit cross section may have a circular, an oval, a similar or any other round shape. For example, the contour of the conduit cross section does not possess corners, which could provoke a reflection of circumferential acoustic waves.

Using a holder carrying the transmitter and the receiver that can be detachably mounted to the conduit facilitates the monitoring of existing conduit systems and at the same time reliably pre-defines the position of the transmitter relative to the receiver. The holder may be configured to be clamped to the conduit. For example, the holder comprises two clamping arms that are mounted to the conduit and then fixed to one another using fixing means (such as fixing screws, nuts and/or latching structures).

More particularly, the holder (e.g. the clamping arms) may be configured in such a way that it can be attached to conduits having different outer diameters (i.e. the holder may be adapted to the outer diameter of the conduit). Thus, the holder may be easily attached to an outer side of an existing conduit (e.g. a liquid filled pipe) and a deposition layer may be detected without having to introduce a sensor into the interior of the conduit. Further, the device according to the invention may be used for detecting soft deposition films, e.g. biofilms. In particular, the device can be used as a sensor for monitoring deposition layers of liquid filled pipes (e.g. of a production or supply facility) such that e.g. impairments of the production process and/or contaminations of the liquid may be avoided. In particular, the device according to the invention may be used for continuously monitoring of the conduit.

The transmitter and the receiver may be disposed on the holder in such a way that they will be are arranged diametrically opposed to one another at the outer side of the conduit when the holder is connected to the conduit.

Moreover, the device according to the invention may comprise an evaluation unit for evaluating signals generated by the receiver upon receipt of acoustic waves evoked by the transmitter to detect a deposition layer on an inner surface of the sidewall of the conduit and/or for detecting whether the level of the medium is below a predetermined value.

In particular, the evaluation unit is a programmed device, e.g. a computer or a microcontroller, and may be configured for receiving signals from the receiver (using a wired or a wireless connection). Further, the evaluation unit may be arranged at the holder, too. However, it is also possible that the evaluation unit is a separate unit to be arranged in a distance from the conduit.

For example, evaluating the signal generated by the receiver by means of the evaluation unit comprises evaluating transmission times and/or amplitude values of the receiver signals and/or comparing the results of the evaluation with pre-determined values. In particular, the amplitude and/or the time response of a receiver signal is compared to pre-determined amplitude and/or the time response values. The pre-determined values may have been generated using a similar structure as the structure to be investigated (or the structure to be investigated itself), wherein a deposition layer was deposited whose properties (e.g. its thickness) or at least some of its properties were known. Also, the pre-determined values could be determined using a similar structure (or the structure to be investigated itself) without any deposition layer to obtain reference values for a non-coated structure. Variations from the reference values indicate the presence of a coating or permit to determine a change of properties of the deposition layer.

In particular, evaluating the receiver signals may enable a detection of the thickness of deposition layers with sub-mm thicknesses, e.g. by operating the transmitter at frequencies (for example at 1 MHz) higher than 5 kHz.

According to another embodiment of the invention, the receiver is configured for receiving first acoustic waves (e.g. surface acoustic waves) excited by the transmitter in the sidewall of the conduit and propagating (e.g. exclusively) in the sidewall and/or for receiving second acoustic waves evoked by the transmitter and propagating at least partially through the medium. For example, the first acoustic waves propagate in the sidewall along a circumferential path. Using such circumferential acoustic waves may avoid or at least reduce an influence of a flow of the medium such that reliable measurements may be carried out even if the medium is flowing.

Accordingly, the evaluation unit may be configured to detect a deposition layer on the inner surface of the sidewall of the conduit and/or whether the level of the medium is below a predetermined value by evaluating the first signals generated by the receiver upon receipt of the first acoustic waves and the second signals generated by the receiver upon receipt of the second acoustic waves.

The transmitter and/or the receiver may comprise a piezo element, e.g. an interdigital piezo-electric transducer. For example, when the holder is connected to the conduit, a piezo-electric substrate of the piezo element is arranged at the outer side of the conduit. In particular, using the holder, the piezo element may be connected to the conduit in a force-fitting manner. However, the piezo-electric substrate may not directly bear against the outer surface of the conduit. Rather, a material region for improving the acoustic coupling between the piezo element and the conduit may be arranged between the piezo-electric substrate and the conduit surface. The material region may comprise at least one adapting layer (e.g. a plastic foil) and/or a (e.g. thin) layer of ultrasonic gel. The material region may provide an acoustically homogeneous connection towards the conduit (e.g. without air inclusions).

According to another embodiment of the invention, at least two transmitter-receiver units are arranged at the holder for providing the transmitter and the receiver, respectively. The receiver units can be operated in a transmitting mode as well as in a receiving mode, wherein, however, one of the units is operated in the transmitting mode, while the other unit is operated in receiving mode. The units may also switch roles, i.e. at a first point in time the first unit may operate in transmitting mode, while the second unit operates in receiving mode, whereas at a second point in time the first unit may operate in receiving mode, while the second unit operates in transmitting mode.

Moreover, the transmitter (e.g. comprising the piezo element mentioned above) may be configured for evoking (e.g. plane) surface acoustic waves propagating in the sidewall of the conduit and mainly in a direction perpendicular to the longitudinal axis of the conduit and/or the receiver may be configured for receiving surface acoustic waves propagating in the sidewall of the conduit and mainly in a direction perpendicular to the longitudinal axis of the conduit. In particular, the surface acoustic waves propagate along a plane perpendicular to the longitudinal axis of the conduit, e.g. along at least a portion of the perimeter of the conduit.

In other words, surface acoustic waves in the conduit sidewall may be generated and/or received that propagate in the circumferential direction of the conduit as already mentioned above. Such surface acoustic waves may be produced by means of an acoustic single phase piezo-electric transducer having a first (e.g. planar) electrode arranged at a side of the piezo-electric substrate that faces away from the conduit sidewall and at least one second (e.g. finger-shaped) electrode on the other side of the piezo-electric substrate. A transducer of this type is able to excite surface acoustic waves on the conduit sidewall with a wavelength which is determined by the spacing distance of the electrode fingers or similar electrode structures on piezo-electric substrate. The transmitter or receiver is arranged in such a way that the second electrode is orientated parallel to the longitudinal axis of the conduit, wherein using this transducer configuration surface acoustic waves (e.g. Lamb waves or Lamb-Rayleigh-waves) propagating perpendicular to the longitudinal axis of the conduit may be generated. In the case of Lamb waves or Lamb-Rayleigh-waves the displacement of opposite surfaces (i.e. the outer and the inner surface) of the conduit sidewall excited by the transmitter is correlated such that, in particular, the amplitude and/or the phases of the displacement movement of the inner and outer surface of the conduit sidewall are interrelated.

For example, the transmitter may be configured for exciting surface acoustic wave bursts, i.e. the transmitter uses a number of consecutive electric pulses with a pre-determined period length corresponding to the target frequency.

It is noted, however, that the transmitter and the receiver may also be configured and operated (e.g. by using a corresponding frequency) in such a way that in addition to the surface acoustic waves propagating perpendicular to the longitudinal axis of the conduit axis, acoustic waves (e.g. surface acoustic waves) propagating obliquely or parallel to the longitudinal axis of the conduit (i.e. in a plane orientated obliquely or parallel to the conduit axis) may be generated and received.

It is however also possible that the transmitter and/or the receiver is configured for evoking or receiving longitudinal compression waves in the medium, wherein the compression waves may predominantly propagate radially, i.e. in a direction perpendicular to the longitudinal axis of the conduit, wherein the compression waves may cross the conduit diametrically. Such compression waves may be excited by using a corresponding transmitter frequency. For example, by using a corresponding transmitter frequency, structural resonance vibrations of the piezo element may be excited causing the transmitter to predominantly excite compression waves, while only a small portion of the waves generated by the transmitter are surface acoustic waves in the conduit sidewall.

The invention is also related to a conduit arrangement, comprising a conduit and at least two (e.g. identical) devices for detecting deposition layers and/or for level detection according to the invention, wherein the holders of the devices are arranged in such a way that the receiver of one of the devices receives acoustic waves evoked by the transmitter of the other device. Such an arrangement could be used e.g. to determine the uniformity of a deposition layer and/or an influence of flow processes (e.g. the flow velocity) in the liquid. In particular, the receiver of one of the devices receives acoustic waves (e.g. surface acoustic waves) generated by the transmitter of the other device that propagate obliquely or parallel to the longitudinal axis of the conduit.

The invention is also related to a method for detecting deposition layers in a conduit conducting a liquid or a soft medium and/or for level detection, in particular using a device as claimed in any of the preceding claims, comprising the steps:
- providing a holder carrying a transmitter for generating acoustic waves and a receiver for receiving acoustic waves evoked by the transmitter;
- connecting the holder to the conduit in such a way that the transmitter and the receiver are arranged on an outer side of a sidewall of the conduit,
- generating acoustic waves in the sidewall of the conduit and/or the medium by means of the transmitter and detecting the acoustic waves by means of the receiver, wherein
- a single transmitter-receiver unit provides both the transmitter and the receiver or the transmitter and the receiver are separate units arranged in a distance from one another at the holder in such a way that the transmitter and the receiver are located in a common plane extending at least essentially perpendicular to a longitudinal axis of the conduit when the holder is connected to the conduit.

According to an embodiment, the transmitter may be operated to alternately generate mainly surface acoustic waves in the sidewall of the conduit and mainly compression (volume) acoustic waves in the medium. For example, the transmitter may be switched between two different operational frequencies for predominantly generating either (e.g. circumferential) surface acoustic waves in the sidewall or (e.g. radial) compression acoustic waves in the medium, respectively. The alternate generation of surface acoustic waves and compression waves may contribute to e.g. a compensation of temperature effects, a determination of the thickness of solid deposition layers and/or a measurement of the horizontal liquid level in a horizontally orientated conduit (i.e. the liquid level of conduits extending horizontally). As already set forth above, the transmitter may be realized by a piezo element transducer (e.g. a single phase transducer), wherein the transducer is switched alternately between two excitation frequencies corresponding to the generation of surface acoustic waves and compression waves, respectively.

In a further embodiment, a single transmitter-receiver unit is arranged at the holder, wherein (e.g. diametrically) opposite of the transmitter-receiver unit a reflecting structure (e.g. a solid bar) is arranged at the holder and connected to the sidewall by the holder. The transmitter-receiver unit may then be operated in a pulse-echo mode, i.e. it may be switched electronically from a transmitting to a receiving mode by a multiplexer. This embodiment may also be operated without the reflecting structure, wherein a circumferential surface acoustic wave travelling along the whole perimeter of the sidewall of the conduit may then be detected after switching the transmitter-receiver unit from the transmitting to the receiving mode.

Accordingly, two alternating receiver signals may be generated. A third receiver signal (e.g. by means of an additional receiver) may be generated that could be used for further compensating temperature effects and/or for determining properties of the deposition layer. The three receiver signals may also be used for detecting the level of the medium.

In another embodiment of the invention, the holder is a first holder carrying two transmitter-receiver units providing the transmitter and the receiver, respectively, wherein a second holder is arranged at the conduit, wherein the second holder also carries two transmitter-receiver units, and wherein one of the transmitter-receiver units of the first holder and one of the transmitter-receiver units of the second holder are alternately operated as transmitter and receiver, respectively, such that, when the transmitter-receiver unit of the first holder is operated as a transmitter, the transmitter-receiver unit of the second holder is operated as receiver receiving acoustic waves evoked by the transmitter-receiver unit of the first holder, and vice versa. The transmitter-receiver units may be implemented by a single phase transducer, which may be set to predominantly generate circumferential surface acoustic waves, but which may also be configured to evoke acoustic waves propagating towards the receiver of the other holder. Switching some of the transmitter-receivers units as described above may allow determining information regarding a flow direction and/or flow velocity of the medium. The second holder in particular may be arranged in a distance from the first holder, wherein the distance may correspond to the diameter of the conduit.

It is noted that, of course, also the embodiments described above in conjunction with the device according to the invention could be used as embodiments of the method according to the invention. Conversely, embodiments described above in conjunction with the method according to the invention could be used as embodiments of the device according to the invention.

Embodiments of the invention will be described hereinafter with reference to the drawings, in which:
- Figure 1: shows a cross-sectional view of a device according to an embodiment of the invention, the device being arranged at a conduit;
- Figure 2: represents a Laser Doppler vibrometry analysis of surface acoustic waves propagating in a sidewall of a conduit;
- Figure 3: depicts receiver signals generated using the device according to the invention;
- Figure 4: represents Laser Doppler vibrometry measurements of acoustic waves propagating in a liquid conducted in a conduit;
- Figure 5: shows a cross-sectional view of a conduit illustrating the propagation of acoustic waves in the conduit sidewall and through the medium in the conduit;
- Figures 6: shows the conduit of Figure 5 with a deposition layer at an inner surface of the conduit sidewall;
- Figure 7: shows receiver signals generated using the device according to the invention for the detection of deposition layers; and
- Figure 8: depicts a partially liquid filled conduit.

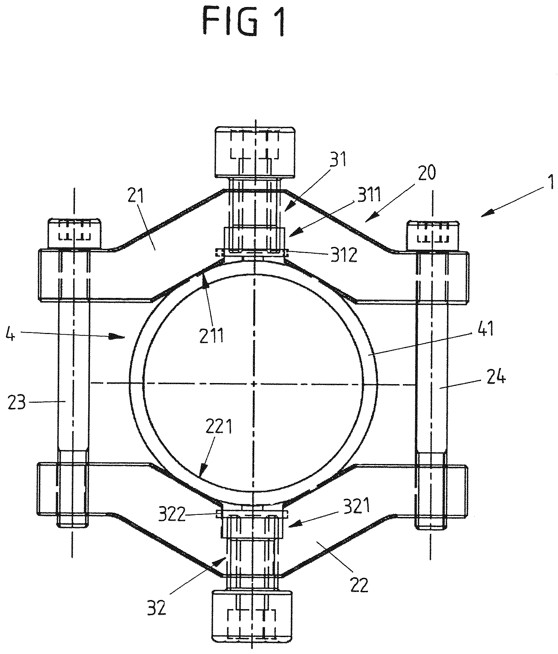

The sensor device 1 according to the invention shown in Figure 1 comprises a holder 20 having a first and a second clamping bracket 21, 22. The first clamping bracket 21 carries a transmitter 31 for generating acoustic waves and the second clamping bracket 22 carries a receiver 32 for receiving acoustic waves evoked by the transmitter 31. The transmitter 31 and the receiver 32 may be fixedly connected to the clamping bracket 21, 22, wherein they might at least partially be arranged in boreholes of the clamping bracket 21, 22.

The holder 20 is arranged at a tube-like conduit 4 for conducting a liquid or a soft medium, wherein a clamping region 211, 221 of the first and the second clamping bracket 21, 22 bears against an outer side of a sidewall 41 the conduit 4. The first and the second clamping bracket 21, 22 are connected to each other by screws 23, 24 such that the holder 20 is detachably fixed to the conduit 4. Further, the holder 20 is configured in such a way and the transmitter 31 and the receiver 32 are arranged at the holder 20 in such a way that, when the holder 20 is attached to the conduit 4, the transmitter 31 and the receiver 32 are arranged diametrically opposite to one another as shown in Figure 1.

The transmitter 31 and the receiver 32 each comprise a piezo element 311, 321 for generating and receiving acoustic waves in the conduit 4, respectively, i.e. acoustic waves propagating in the sidewall 41 and/or in the liquid conducted by the conduit 4. The piezo elements 311, 321 are arranged at/in the holder brackets 21, 22 in such a way that, when the holder 20 is attached to the conduit 4, they are pressed against the outer surface of the sidewall 41 such that they may be coupled in a force-fitting manner to the conduit 4. It is noted that a material region 312, 322 may be arranged between the piezo elements 311, 321 and the outer surface of the sidewall 41, wherein the material region 312, 322 (e.g. an ultrasonic gel) improves the acoustic coupling between the piezo elements 311, 321 and the conduit sidewall 41. Further, the piezo elements 311, 321 may be operated both as transmitter and receiver, i.e. the transmitter 31 may be switched to work as the receiver and the receiver 32 may be switched to work as the transmitter.

When the transmitter 31 is activated, surface acoustic waves will be generated within the sidewall 41 of the conduit 4. A portion of these acoustic waves will propagate in the sidewall 41 towards the receiver 32, while another portion will be converted into volume sound waves in the liquid and propagate to the receiver 32 through the liquid.

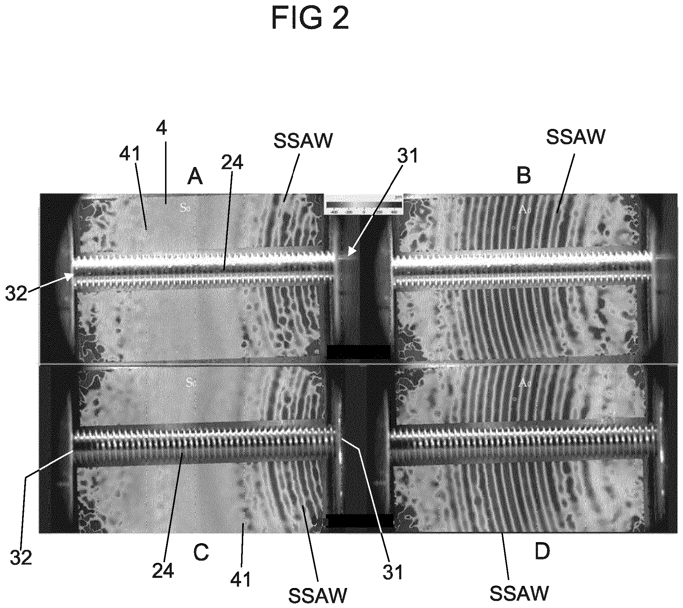

Surface acoustic waves (e.g. Lamb waves or Lamb-Rayleigh waves) generated by the transmitter 31 in a sidewall 41 of a conduit 4 are illustrated in Figure 2 (the surface acoustic waves being referred to as SSAW - sidewall surface acoustic waves), wherein the surface acoustic waves are made visible by laser Doppler vibrometry measurements. More particularly, Figure 2 illustrates the situation in an empty conduit (upper drawings A and B corresponding to two different points in time) and in a water-filled conduit (lower drawings C and D also corresponding to two different points in time), respectively, wherein the conduit 4 is shown in side view (i.e. the conduit 4 is looked at from the right hand side in Fig. 1). It is noted that Lamb waves may be generated if a transmitter frequency f = c_{L}/λ is used, wherein c_{L} is the velocity of the Lamb waves in the conduit sidewall (which depends on the material of the sidewall) and λ is the wavelength pre-determined by the distance between the electrode fingers of the piezo-electric transducer used as transmitter.

Using a metal (e.g. steel) conduit having a sidewall thickness of 3 mm, the phase velocity of the excited A₀ mode is about 2900 m/s. Having a distance between the electrode fingers of 3 mm results in a transmitter frequency of about 1 MHz. The transmitter piezo element may be configured (e.g. dimensioned) in such a way that structural vibrations of the piezo element are avoided, e.g. in order to avoid or suppress the generation of compression acoustic waves that propagate directly through the sidewall of the conduit and then through the medium. As mentioned above, single phase transducers may be used for realizing the transmitter. Further, other types of transducers might be used; e.g. transducers that comprise elongated piezo elements (bar shape piezo elements) or using a plurality of such elongated piezo elements arranged parallel to one another. The dimensions and/or the shape of the piezo elements may be adapted to the dimensions and/or the shape of the conduit.

However, it may also be possible to use transmitter frequencies (e.g. of about 1.9 MHz) that excite structural (e.g. thickness) resonance vibrations of the piezo element, e.g. in order to generate compression waves in the medium provided in the conduit.

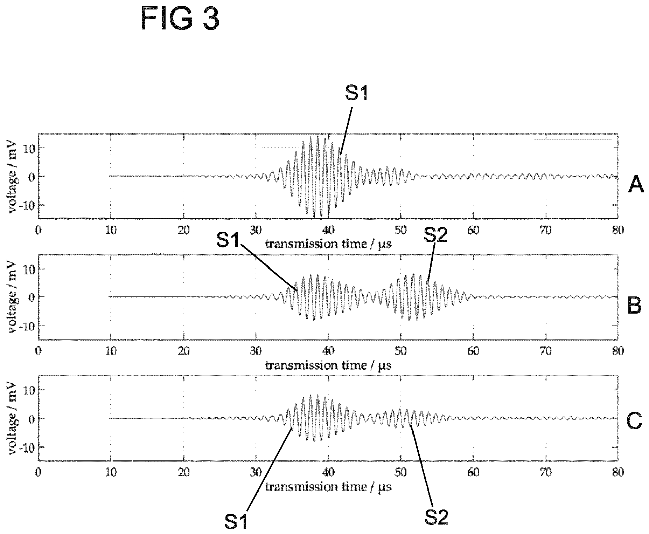

Figure 3 depicts three measurements carried out by means of a sensor device according to the invention, wherein the measurements have been carried out at an empty conduit in the form of a tube (measurement A), a water-filled tube (measurement B) and a water-filled tube with an interior blocking element (measurement C). The transmitter has been operated using frequencies that predominantly excite surface acoustic waves in the conduit sidewall as discussed above.

The measurement curves of measurements A-C represent receiver signals generated upon the receipt of acoustic waves evoked by the transmitter (such as the transmitter 31 in Fig. 1) of the sensor device, wherein the transmitter generated pulsed acoustic waves. Accordingly, the receiver (such as receiver 32 in Fig. 1) receives a pulsed acoustic wave and generates a corresponding pulsed signal S1. If the tube is empty, only acoustic waves propagating in the sidewall (such as sidewall 41 in Fig. 1) of the tube are excited such that a single acoustic wave pulse is received by the receiver resulting in a single receiver signal S1 (measurement A). Due to the large difference between the acoustic impedances of the sidewall material (e.g. steel) and air, only a negligible portion of acoustic waves will propagate through the air-filled inner volume of the conduit.

If the tube is filled with water (measurement B), a first portion of acoustic waves propagating along the tube sidewall and a second, delayed portion caused by acoustic waves converted into volume waves in the water and travelling through the water is received by the receiver (resulting in two successive receiver signals S1, S2). If a blocking element is arranged in the interior of the liquid filled tube (measurement C), the second acoustic pulse received by the receiver and thus the second receiver signal S2 is weakened.

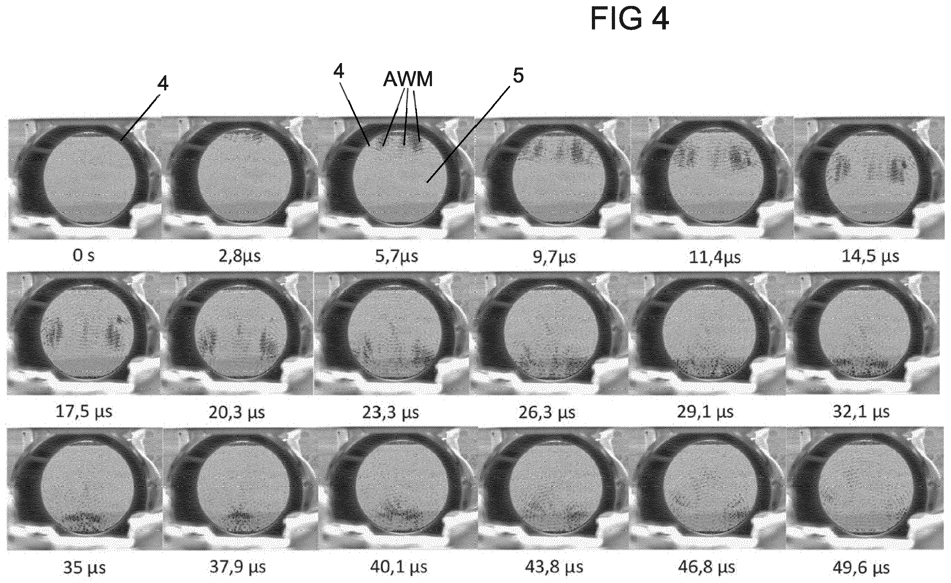

The propagation of acoustic waves AWM from the transmitter to the receiver through the medium 5 in the conduit 4 is illustrated in Figure 4 for a plurality of successive points in time (Fig. 4 showing a corresponding laser Doppler vibrometry measurement).

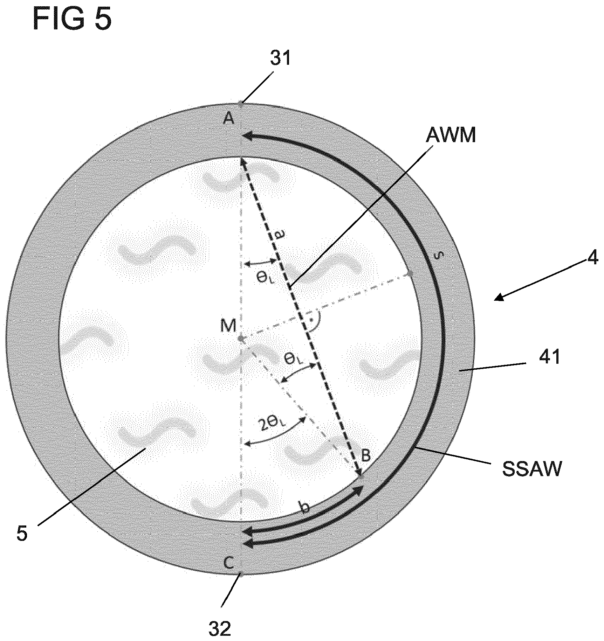

The propagation of both surface acoustic waves SSAW in the sidewall 41 of the conduit 4 and acoustic waves AWM through the medium 5 are illustrated in Figure 5. The surface acoustic waves portion SSAW evoked by the transmitter 31 located at point A propagates along a circumferential path (having a length s) in the sidewall 41 towards the receiver 32 located at point C.

The acoustic wave portion AWM is generated by a conversion of surface acoustic waves in the sidewall 41 into volume acoustic waves in the medium. The volume acoustic waves AWM propagate along a path AB (length a), which is a secant of the cross section of conduit 4, towards a sidewall point B through the medium 5, wherein at least a portion of the acoustic waves AWM in the medium 5 is reconverted into surface acoustic waves at point B, these surface acoustic waves (e.g. a Lamb wave) travelling in the sidewall 41 along a path with length b to the receiver 32. The path AB encloses an angle θ_{L} with a diameter AC (i.e. a connecting line between points A and C through a center M of the conduit cross section). The volume acoustic wave portion AWM is emitted into the medium 5 under the Rayleigh angle θ, i.e. θ_{L} = θ = arcsin (cₘ/c_{sw}), wherein c_{sw} is the sound velocity in the conduit sidewall and cₘ is the sound velocity in the medium. It is noted that the acoustic wave portion AWM impinges on the sidewall 41 in point B also at the Rayleigh angle θ (due to the circular cross section of conduit 4).

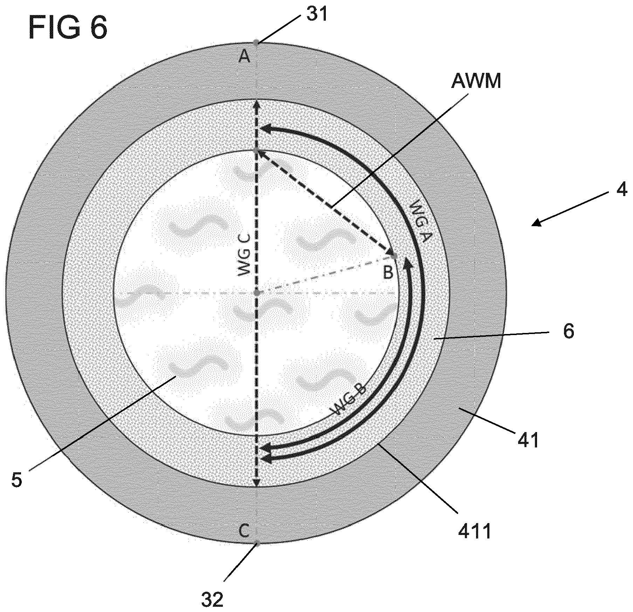

Figure 6 illustrates the situation if a deposition layer 6 is arranged at an inner surface 411 of the conduit 4. At least a portion WG A of the acoustic waves generated by transmitter 31 propagates in the deposition layer 6. Further, the angle under which the acoustic waves are coupled into the medium 5 changes due to the deposition layer 6. Further, the portion propagating through the medium 5 arrives at a point B of the deposition layer and is reconverted into surface acoustic waves WG B which at least partially propagate in the deposition layer 6 towards the receiver 32. If the thickness of the deposition layer 6 (e.g. a solid layer such as a lime layer) is larger than the thickness of the sidewall 41, surface acoustic waves may propagate in the deposition layer 6 rather than in the sidewall 41. Thus, if the effective sidewall thickness may become larger than the wavelength of the acoustic waves, Lamb-Rayleigh waves may be excited rather than Lamb waves. This may result in significant changes of the amplitude and/or the transmission times of the acoustic waves AWM, i.e. the waves that partially propagate through the medium 5. Further, the transmitter may be operated at a frequency to predominantly generate compression waves in the medium as already set forth above to detect transmission time deviations. The transmission time of such compression waves may decrease with increasing thickness of the deposition layer as the liquid cross section becomes smaller and the sound velocity may be higher in a solid deposition layer than in the liquid.

It is noted that in Fig. 5, 6 and 8, only a portion of the acoustic waves excited by the transmitter 31 is illustrated. For example, the transmitter 31 may excite acoustic waves in the sidewall 41 both in the clockwise and the anti-clockwise direction (e.g. mirror-symmetrically).

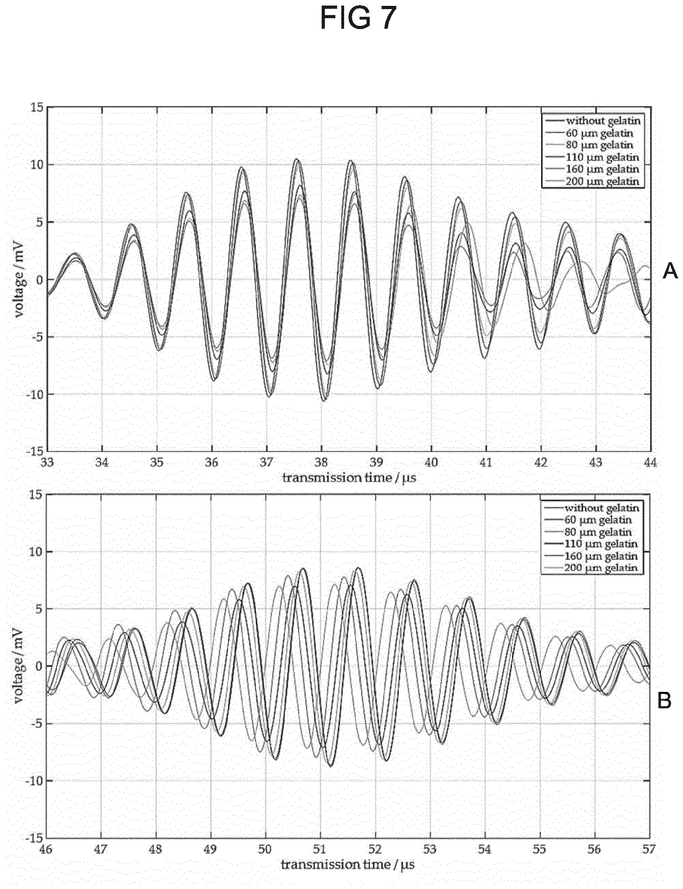

Figure 7 illustrates transmission time measurements of the surface acoustic waves in the conduit sidewall (measurements A) and of the volume acoustic waves propagating through the medium in the conduit (measurements B) for soft deposition (gelatine) layers with different thicknesses. An increasing thickness of the deposition layer results in an increased transmission time of the surface acoustic waves in the conduit sidewall, while the transmission time of the volume acoustic waves decreases. The amplitude of both the surface and the volume acoustic waves decreases due to dampening effects caused by the deposition layers. Since the transmission time of the acoustic waves depends on the thickness (and other properties) of the deposition layer, it is possible (using a suited calibration) to determine the thickness and/or other properties of the deposition layers by means of transmission time measurements, wherein in addition the amplitude measurements may be taken into account. For example, an evaluation of the amplitude of the receiver signal might be used to compensate for temperature drifts. For example, a temperature change of the medium may result in a shift of the transmission time, while the signal amplitude remains unchanged or is affected differently. Using the ratio between a change of the transmission time and a change (e.g. a reduction) of the signal amplitude, it may be determined whether a change of the receiver signal is caused by a temperature change or a deposition layer and/or the temperature change may be compensated. Further, a temperature change of the medium may be detected by exciting compression waves in the medium propagating directly through the medium to the receiver since the transmission time of such compression waves mainly depends on the sound velocity in the medium (which, in turn, depends on the temperature).

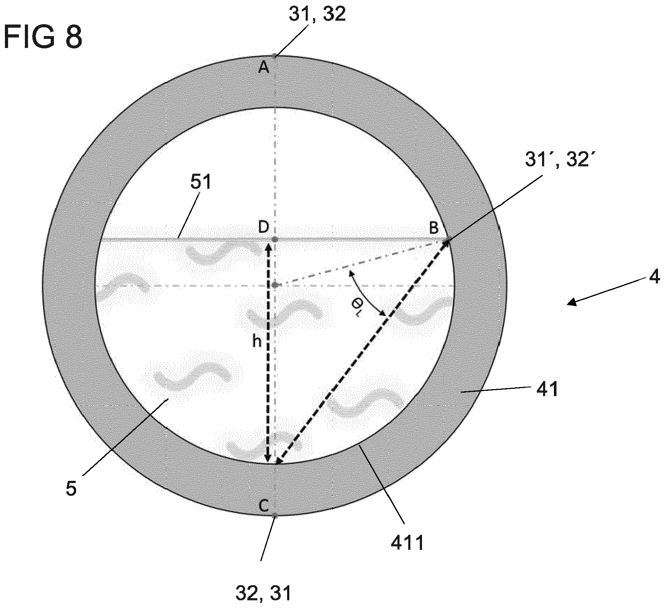

Figure 8 illustrates another possibility of using the device according to the invention, namely for detecting if the height h of a horizontal level 51 of the medium 5 in the horizontally oriented conduit 4, i.e. the height h of the level 51 of the medium 5 extending parallel to the longitudinal axis of the conduit 4, drops below a minimal height hₘᵢₙ. The level height h is measured on a diameter line perpendicular to the level 51 between a point D of the level 51 and a bottom of the liquid, i.e. an intersection of the diameter line and the inner surface 411 of the conduit sidewall 41.

An acoustic wave excited by the transmitter-receiver unit 31 at position A coupled into the inner volume of conduit 4 can reach the receiver 32 only if the level 51 has a minimal height hₘᵢₙ = 2r cos² θ_{L.} Thus, if the liquid level 51 drops below the minimal height hₘᵢₙ, the receiver signal will vanish. Using a plurality of transmitter and/or receivers arranged in the same plane perpendicular to the longitudinal axis of the conduit 4, but at different circumferential positions (such as the transmitter-receiver unit 31', 32' at position B), a plurality of different liquid levels 51 may be detected (the transmitter-receiver units at positions A and B being operated in the transmitting mode, while the transmitter-receiver unit at position C is operated in the receiving mode).

The liquid level 51 may also be measured by using the transmitter-receiver unit at position C as transmitter for generating (pulsed) compression waves (e.g. by using a thickness vibration resonance frequency) in the liquid reflected at the surface of the liquid back to the transmitter-receiver unit at position C, which may also be operated for receiving the reflected waves in a pulse-echo mode.

## Claims

1. Device for detecting deposition layers in a conduit conducting a liquid or a soft medium and/or for level detection, comprising
- a transmitter (31) for generating acoustic waves (SSAW, AWM);
- a receiver (32) for receiving acoustic waves (SSAW, AWM) evoked by the transmitter (31);
- a holder (20) carrying the transmitter (31) and the receiver (32), wherein the holder (20) is configured to be detachably connected to the conduit (4) in such a way that the transmitter (31) and the receiver (32) are arranged on an outer side of a sidewall (41) of the conduit (4), wherein
- a single transmitter-receiver unit provides both the transmitter (31) and the receiver (32) or the transmitter (31) and the receiver (32) are separate units arranged in a distance from one another at the holder (20) in such a way that the transmitter (31) and the receiver (32) are located in a common plane extending at least essentially perpendicular to a longitudinal axis of the conduit (4) when the holder (20) is connected to the conduit (4).

2. Device as claimed in claim 1, further comprising an evaluation unit for evaluating signals generated by the receiver (32) upon receipt of acoustic waves (SSAW, AWM) evoked by the transmitter (31) to detect a deposition layer (6) on an inner surface (411) of the sidewall (41) of the conduit (4) and/or for detecting whether the level (51) of the medium (5) is below a predetermined value.

3. Device as claimed in claim 1 or 2, wherein the receiver (32) is configured for receiving first acoustic waves excited by the transmitter (31) in the sidewall (41) of the conduit (4) and propagating in the sidewall (41) and/or for receiving second acoustic waves evoked by the transmitter (31) and propagating at least partially through the medium (5).

4. Device as claimed in claims 2 and 3, wherein the evaluation unit is configured to detect a deposition layer (6) on the inner surface (411) of the sidewall (41) of the conduit (4) and/or whether the level (51) of the medium (6) is below a predetermined value by evaluating the first signals generated by the receiver (32) upon receipt of the first acoustic waves and the second signals generated by the receiver (32) upon receipt of the second acoustic waves.

5. Device as claimed in any of the preceding claims, wherein the transmitter (31) and the receiver (32) are arranged diametrically opposed to one another at the outer side of the sidewall (41) of the conduit (4) when the holder (20) is connected to the conduit (4).

6. Device as claimed in any of the preceding claims, wherein the transmitter (31) and/or the receiver (32) comprises a piezo element.

7. Device as claimed in claim 6, wherein, when the holder (20) is connected to the sidewall (41) of the conduit (4), a piezo-electric substrate of the piezo element is arranged at the outer side of the sidewall (41).

8. Device as claimed in any of the preceding claims, wherein the transmitter (31) is configured for evoking surface acoustic waves (SSAW) propagating in the sidewall (41) of the conduit (4) and mainly in a direction perpendicular to the longitudinal axis of the conduit (4) and/or the receiver (32) is configured for receiving surface acoustic waves (SSAW) propagating in the sidewall (41) of the conduit (4) and mainly in a direction perpendicular to the longitudinal axis of the conduit (4).

9. Device as claimed in claim 8, wherein the surface acoustic waves (SSAW) propagate in the sidewall (41) along a circumferential path.

10. Device as claimed in any of the preceding claims, wherein the transmitter (31) and/or the receiver (32) is configured for evoking or receiving Lamb waves or Lamb-Rayleigh waves in the sidewall (41) of the conduit (4).

11. Device as claimed in any of the preceding claims, wherein the transmitter (31) and/or the receiver (32) is configured for evoking or receiving longitudinal compression waves (AWM) in the medium (5).

12. Conduit arrangement, comprising a conduit and at least two devices as claimed in any of the preceding claims, wherein the holders (20) of the devices (1) are arranged in such a way that the receiver of one of the devices (1) receives acoustic waves (SSAW, AWM) evoked by the transmitter of the other device (1).

13. Method for detecting deposition layers in a conduit conducting a liquid or a soft medium and/or for level detection, in particular using a device as claimed in any of the preceding claims, comprising the steps:
- providing a holder (20) carrying a transmitter (31) for generating acoustic waves (SSAW, AWM) and a receiver (32) for receiving acoustic waves (SSAW, AWM) evoked by the transmitter (31);
- connecting the holder (20) to the conduit (4) in such a way that the transmitter (31) and the receiver (32) are arranged on an outer side of a sidewall (41) of the conduit (4),
- generating acoustic waves in the sidewall (41) of the conduit (4) and/or the medium (5) by means of the transmitter (31) and detecting the acoustic waves (SSAW, AWM) by means of the receiver (32), wherein
- a single transmitter-receiver unit provides both the transmitter (31) and the receiver (32) or the transmitter and the receiver (31, 32) are separate units arranged in a distance from one another at the holder (20) in such a way that the transmitter (31) and the receiver (32) are located in a common plane extending at least essentially perpendicular to a longitudinal axis of the conduit (4) when the holder (20) is connected to the conduit (4).

14. Method as claimed in claim 13, wherein the transmitter (31) is operated to alternately generate mainly acoustic waves (SSAW) in the sidewall (41) of the conduit (4) and mainly acoustic waves (AWM) in the medium (5).

15. Method as claimed in claim 13 or 14, wherein the holder (20) is a first holder carrying two transmitter-receiver units providing the transmitter (31) and the receiver (32), respectively, wherein a second holder is arranged at the conduit (4), wherein the second holder also carries two transmitter-receiver units, and wherein one of the transmitter-receiver units of the first holder and one of the transmitter-receiver units of the second holder are alternately operated as transmitter and receiver, respectively, such that, when the transmitter-receiver unit of the first holder is operated as a transmitter, the transmitter-receiver unit of the second holder is operated as receiver receiving acoustic waves evoked by the transmitter-receiver unit of the first holder, and vice versa.
